# EUROPEAN PATENT SPECIFICATION

(11) **EP 3 623 440 B1**
(45) Date of publication and mention of the grant of the patent: **14.01.2026**
(21) Application number: 18798108.9
(22) Date of filing: 11.05.2018
(51) Int. Cl.: C08G 65/26, C09D 5/16, C09D 171/02, C09D 7/65, B05D 7/24, C03C 17/42, G02B 1/18, G02B 27/00

(54) **SURFACE TREATMENT AGENT CONTAINING PERFLUORO(POLY)ETHER GROUP-CONTAINING COMPOUND**
OBERFLÄCHENBEHANDLUNGSMITTEL MIT PERFLUOR(POLY)ETHERGRUPPENHALTIGER VERBINDUNG
AGENT DE TRAITEMENT DE SURFACE COMPRENANT UN COMPOSÉ CONTENANT UN GROUPE PERFLUORO(POLY)ÉTHER

(30) Priority: 12.05.2017 JP 2017095743
(43) Date of publication of application: 18.03.2020
(73) Proprietor: Daikin Industries, Ltd., Osaka-shi, Osaka 530-0001 (JP)
(72) Inventor: MITSUHASHI, Hisashi, Osaka-shi Osaka 530-8323 (JP); NAKAI, Yasuhiro, Osaka-shi Osaka 530-8323 (JP); NOMURA, Takashi, Osaka-shi Osaka 530-8323 (JP); NAITOU, Masato, Osaka-shi Osaka 530-8323 (JP)
(74) Representative: Hoffmann Eitle
(86) International application number: PCT/JP2018/018338
(87) International publication number: WO 2018/207916

(56) References cited:
- EP-A1- 0 337 311
- EP-A2- 0 970 984
- JP-A- 2000 007 779
- JP-A- H0 238 383

## Description

### Technical Field

The present invention relates to a surface-treating agent comprising a perfluoro(poly)ether group-containing compound.

### Background Art

A certain fluorine-containing compound is known to be able to provide excellent properties, such as water-repellency, oil-repellency and antifouling property, when used for surface treatment of a base material. A layer obtained from a surface-treating agent containing a fluorine-containing compound (also referred to as a "surface-treating layer" hereinafter) is applied to various base materials such as glasses, plastics, fibers and building materials, as a so-called functional thin film.

Known as such a fluorine-containing compound is a perfluoropolyether group-containing silane compound having a perfluoropolyether group in a molecular backbone and having a hydrolyzable group bonded to a Si atom at the molecular end or the end part (see JP-A-2008-534696 and WO 97/07155). When a surface-treating agent containing this perfluoropolyether group-containing silane compound is applied to a base material, the hydrolyzable group bonded to a Si atom reacts with a Si-OH group of the base material and the hydrolyzable groups react with each other between the compound to form a -Si-O-Si- bond, thereby obtaining a surface-treating layer.

Known as another fluorine-containing compound is a compound having a perfluoropolyether group or a perfluoroalkylene group in a molecular backbone and further containing **e.g.** -OH, -SH, -NR¹¹₂ (R¹¹ is H or lower alkyl) at the molecular end; see JP-A-2016-52779 disclosing that such a fluorine-containing compound as above is used to form a surface-treating layer on a surface of a base material via the diamond-like carbon.

EP-A-0 337 311 discloses a process for protecting marble, stones, tiles, cement, gypsum or wood and other analogous materials utilized in particular in the building sector from the deterioration action of atmospheric agents and pollutants, by applicating onto said materials a protective agent comprising microemulsions of perfluoropolyethers containing functionalized groups.

EP-A-0 970 984 describes (per)fluoroether acyl peroxides of the specified formula Y'-(CF₂-CF(CF₃)O)ₘ-(CX'FO)ₙ-CF₂CO-O-O-CO-CF₂- (OCX'F)ₙ-(OCF(CF₃)-CF2)ₘ-Y' and having an average equivalent weight (EW) of 350-5000, and a process for producing the same.

### Summary of Invention

### Technical Problem

The surface-treating layers disclosed in JP-A-2008-534696 and WO 97/07155 are each bonded to the base material by means of the **-Si-O-Si-** bond, and this bond is broken by hydrolysis, and durability may decrease in an acid or alkaline environment, particularly in an alkaline environment. Particularly when such a surface-treating layer is used in articles that are likely to be exposed to an acid or alkaline environment, for example, articles to which human sweat can attach (e.g., touch panels), the surface-treating layer may have a more conspicuous problem.

The surface-treating layer disclosed in JP-A-2016-52779 is bonded to the base material through the diamond-like carbon layer by means of e.g. a -C-O- bond, a -C-N-bond, a -C-S- bond, but has no -Si-O-Si- bond, and therefore, the layer has resistance to acids and alkalis. However, it has been found by the studies of the present inventors that an article having the surface-treating layer disclosed in JP-A-2016-52779 cannot sufficiently meet the gradually increasing demand for enhancement in friction durability.

It is an object of the present invention to provide a surface-treating agent suitable for forming a layer having better friction durability. It is another object of the present invention to provide an article including a layer formed of this surface-treating agent (also referred to as a "surface-treating layer" hereinafter).

### Solution to Problem

The present invention provides an agent (also referred to as "the present agent" hereinafter) which is a surface-treating agent comprising a perfluoro(poly)ether group-containing compound of formula (A):

Rf- (PFPE-Z¹-Y-Z²)*ₙ*-R (A)

wherein
- Rf: is C₁₋₁₆-alkyl optionally substituted by one or more fluorine atoms;
- PFPE: each independently is a group of the formula (a), (b) or (c):

- (OCF₂CF₂CF₂)*_{d}*- (a)

wherein *d* is an integer of 1-200;

- (OCF₂CF₂CF₂CF₂)*_{c}*- (OCF₂CF₂CF₂) = (OCF₂CF₂)ₑ- (OCF₂)*_{f}*- (b)

wherein c and d each independently are an integer of 0-30; e and *f* each independently are an integer of 1-200; the sum of *(c+d+e+f)* is an integer of 10-200; and the order of repeating units in parentheses and affixed with a subscript *c*, *d*, e or
*f* is arbitrary;

- (R⁶-R⁷)*j*⁻ (c)

wherein R⁶ is OCF₂ or O (CF₂) ₂; R⁷ is O (CF₂) ₂, O (CF₂) ₃, O (CF₂) ₄, O (CF₂) ₅, O (CF₂) ₆ or a combination of 2 or 3 of these groups; and j is an integer of 2-100.
- Z¹: each independently is a single bond or optionally substituted C₁₋₁₂-alkylene;
- Z²: each independently is a single bond or optionally substituted C₁₋₁₂-alkylene;
- Y: each independently is -(O)ₘ- wherein m is an integer of 1-10; provided that at least one structure formed of two or more continuous oxygen atoms is present in formula (A);
- *n*: is an integer of 1-400;
- R: is -PFPE-Rf' or Rf'; and
- Rf': has the same definition as that of Rf.

Also, the present invention provides (i) a pellet also referred to as "the present pellet" hereinafter) comprising the present agent and (ii) an article also referred to as "the present article" hereinafter) comprising a base material and a layer which is formed on a surface of the base material from the present agent.

Yet further, the present invention provides a method also referred to as "the present method" hereinafter) for forming a surface-treating layer on a surface of a base material, comprising supplying the present agent to a surface of the base material to form a surface-treating layer on the surface of the base material.

### Advantageous Effects of Invention

According to the present invention, a surface-treating agent suitable for forming a surface-treating layer having better friction durability can be provided.

### Description of Embodiments

### [Surface-treating agent]

A surface-treating agent of the present invention is described hereinafter.

The surface-treating agent of the present invention comprises a perfluoro(poly)ether group- (also referred to as "PFPE" hereinafter) containing compound of formula (A) :

Rf- (PFPE-Z¹-Y⁻Z²)ₙ-R (A).

In formula (A), Rf is C₁₋₁₆-alkyl optionally substituted by one or more fluorine atoms.

The " C₁₋₁₆-alkyl " in the C₁₋₁₆-alkyl optionally substituted by one or more fluorine atoms may be linear or branched, and is preferably linear or branched C₁₋₆-alkyl, particularly C₁₋₃-alkyl, and more preferably linear C₁₋₃-alkyl.

The Rf is preferably C₁₋₁₆-alkyl group substituted by one or more fluorine atoms, more preferably CF₂H-(C₁₋₁₅-fluoroalkylene), and further more preferably C₁₋₁₆-perfluoroalkyl.

The C₁₋₁₆- may be linear or branched, and is preferably linear or branched C₁₋₆-perfluoroalkyl, particularly C₁₋₃-perfluoroalkyl, and more preferably linear C₁₋₃-perfluoroalkyl, specifically -CF₃, -CF₂CF₃ or - CF₂CF₂CF₃.

In formula (A), PFPE each independently is a group of the formula (a), (b) or (c):

- (OCF₂CF₂CF₂) *_{d}*- (a)

- (OCF₂CF₂CF₂CF₂) *_{c}*- (OCF₂CF₂CF₂) *_{d}*- (OCF₂CF₂) *ₑ*- (OCF₂)*_{f}*- (b)

-(R⁶-R⁷)*ⱼ*- (c)

The repeating units in formulae (a)-(c) are each linear.

In the formula -(OCF₂CF₂CF₂)_{d}- (a), d is an integer of 1-200, preferably 5-200, and more preferably 10-.

In the formula - (OCF₂CF₂CF₂CF₂) _{c}- (OCF₂CF₂CF₂) _{d}-(OCF₂CF₂) ₑ- (OCF₂)_{f}- (b), c and d are each independently an integer of 0-30, e and f are each independently an integer of 1-200, preferably 5-200, more preferably 10-200, the sum of (c+d+e+f) is 10-200, and the order of repeating units in parentheses and affixed with a subscript c, d, e or f is arbitrary in the formula. In one embodiment, the PFPE may be - (OC₂F₄)ₑ- (OCF₂)_{f}-, wherein e and f are as defined above, and the order of repeating units in parentheses is arbitrary.

In the formula - (R⁶-R⁷)- (c) , R⁶ is OCF₂ or OC₂F₄, preferably OC₂F₄, and R⁷ is a group selected from OC₂F₄, OC₃F₆, OC₄Fₑ, OC₅F₁₀ and OC₆F₁₂, or is a combination of two or three groups independently selected from these groups, and OC₂F₄, OC₃F₆, OC₄F_{B}, OC₅F₁₀ and OC₆F₁₂ are each linear. Preferably, R⁷ is OC₂F₄, OC₃F₆ or OC₄F_{B}, or is OC₃F₆, OC₄F_{B}, OC₅F₁₀ or OC₆F₁₂, or is a combination of two or three groups independently selected from these groups. Examples of the combination of two or three groups independently selected from OC₂F₄, OC₃F₆ and OC₄Fₑ include, -OC₂F₄OC₃F₆-, -OC₂F₄OC₄F_{B}-, -OC₃F₆OC₂F₄-, -OC₃F₆OC₃F₆-, - OC₃F₆OC₄F_{B}-, -OC₄F₈OC₄F₈-, -OC₄F_{B}OC₃F₆-, -OC₄F_{B}OC₂F₄-, - OC₂F₄OC₂F₄OC₃F₆-, -OC₂F₄OC₂F₄OC₄F_{B}-, -OC₂F₄OC₃F₆OC₂F₄-, - OC₂F₄OC₃F₆OC₃F₆-, -OC₂F₄OC₄F_{B}OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄ (wherein C₂F₄, C₃F₆ and C₄F_{B} are linear). The j ≥ 2, preferably ≥ 3, more preferably ≥ 5, and is an integer of ≤ 100, preferably ≤ 50. In this embodiment, the PFPE of formula (c) is preferably - (OC₂F₄OC₃F₆)ⱼ- or -(OC₂F₄-OC₄F₈)ⱼ-.

In formula (A), Z¹ and Z² at each occurrence are independently a single bond or optionally substituted C₁₋₁₂-alkylene, and preferably a single bond. The substituents are each preferably halogen or C₁₋₆-alkyl, and more preferably F.

In formula (A), Y each independently is -O- or -O-O-, and in formula (A), at least one structure formed of two or more continuous oxygen atoms, that is, at least one -O-O-, is present.

In formula (A), n is an integer of 1-400,preferably 1-300, and more preferably 1-100.

In formula (A), R is -PFPE-Rf' or Rf'. Rf' has the same definition as that of Rf. Rf and Rf' may be the same or different.

The number-average molecular weight of the compound of formula (A) is preferably ≥ 2,000, more preferably ≥ 4,000, and is preferably ≤ 70,000, more preferably ≤ 50,000, further more preferably ≤ 20,000.

The number-average molecular weight of the perfluoropolyether moiety (Rf-PFPE- moiety or -PFPE-moiety) of the compound of formula (A) can be, for example, preferably 2,000-70,000, and more preferably 5,000-20,000.

The mass of active oxygen (PO value) (one oxygen atom contained in a structure -O-O-) based on 100 g of the compound of formula (A) is preferably ≤ 5.0, and more preferably 0.5-1.3.

In the present invention, the PO value is measured by ¹⁹F-NMR analysis.

The compound of formula (A) is contained preferably in an amount of 0.01-100 parts by mass (pbm), and more preferably 0.1-30 pbm, based on 100 pbm of the surface-treating agent.

The compound of formula (A) may be produced by a process well known to a person skilled in the art, and may be produced by, for example, allowing CF₂=CF₂ and oxygen to react with each other.

The present agent may have been diluted with a solvent. Such a solvent is not limited, and is, for example, a solvent selected from perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane (e.g. ZEORORA-H (trade name)), C₄F₉OCH₃, C₄F₉OC₂H₅, CF₃CH₂OCF₂CHF₂, C₆F₁₃CH=CH₂, C₆F₁₃OCH₃, xylene hexafluoride, perfluorobenzene, methyl pentadecafluoroheptyl ketone, trifluoroethanol, pentafluoropropanol, hexafluoroisopropanol, HCF₂CF₂CH₂OH, methyl trifluoromethanesulfonate, trifluoroacetic acid and CF₃O(CF₂CF₂O)_{m'} (CF₂O)_{n'}CF₃ [wherein m' and n' are each independently an integer of 0-1000, and the order of presence of each repeating unit enclosed in parentheses and affixed with m' or n' is arbitrary in the formula, provided that (m'+n') is ≥ 1], 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, and 1,1,1,4,4,4-hexafluoro-2-butene. These solvents can be used singly or as a mixture of two or more.

The present agent may contain other components in addition to the perfluoro(poly)ether group-containing compound. Examples of such other component include an (unreactive) fluoropolyether compound that can be understood as a fluorine-containing oil, preferably a perfluoropolyether compound (referred to as a "fluorine-containing oil" hereinafter), an (unreactive) silicone compound that can be understood as a silicone oil (referred to as a "silicone oil" hereinafter), alcohol and a catalyst.

The fluorine-containing oil does not have a peroxide structure in its molecular structure. Examples of the fluorine-containing oil include a compound of formula (3) (perfluoropolyether compounds).

Rf¹- (OC₄F₈)_{a'}- (OC₃F₆)_{b'}- (OC₂F₄)_{c'}- (OCF₂)_{d'}-Rf² ... (3)

wherein Rf¹ is C₁₋₁₆-alkyl group optionally substituted by one or more F (preferably, C₁₋₁₆-perfluoroalkyl), Rf² is H, F or C₁₋₁₆-alkyl optionally substituted by one or more F (preferably, C₁₋₁₆ -perfluoroalkyl), , and Rf¹ and Rf² are more preferably each independently C₁₋₃-perfluoroalkyl.

a', b', c' and d' each represent the number of repeating units of each type among 4 types of perfluoropolyether constituting a main backbone of a polymer and are each independently an integer of 0-300, and (a'+b'+c'+d') is ≥ 1, preferably 1-300, and more preferably 20-300. The order of repeating units in parentheses and affixed with a subscript a', b', c' or d' is arbitrary in the formula. Of these repeating units, - (OC₄F₈)- may be any of - (OCF₂CF₂CF₂CF₂) -, - (OCF (CF₃) CF₂CF₂) -, - (OCF₂CF (CF₃) CF₂) -, - (OCF₂CF₂CF (CF₃) ) -, - (OC(CF₃)₂CF₂)-, - (OCF₂C(CF₃)₂)-, -(OCF(CF₃)CF(CF₃))-, - (OCF (C₂F₅) CF₂) - and - (OCF₂CF (C₂F₅)) -, and is preferably - (OCF₂CF₂CF₂CF₂)-. - (OC₃F₆) - may be any of - (OCF₂CF₂CF₂)-, - (OCF (CF₃) CF₂) - and - (OCF₂CF (CF₃) ), and is preferably - (OCF₂CF₂CF₂) -. - (OC₂F₄)- may be either - (OCF₂CF₂) - or - (OCF(CF₃) )-, and is preferably - (OCF₂CF₂) -.

The perfluoropolyether compound of formula (3) is, for example, a compound of either formula (3a) (compound (3a)) or (3b) (compound (3b)), and may be one compound or a mixture of two or more.

Rf¹- (OCF₂CF₂CF₂) -Rf² ... (3a)

Rf¹- (OCF₂CF₂CF₂CF₂) -(OCF₂CF₂CF₂) _{b"}-(OCF₂CF₂) _{c"}-(OCF₂)_{d"}- Rf² ... (3b)

In these formulas, Rf¹ and Rf² are as described above; in formula (3a), b" is an integer of 1-100; and in formula (3b), a" and b" are each independently an integer of 0-30, for example, 1-30, and c" and d" are each independently an integer of 1-300. The order of repeating units in parentheses and affixed with a subscript a", b", c" or d" is arbitrary in the formula.

The fluorine-containing oil may have a number average molecular weight of 1,000-30,000. Owing to this, high surface lubricity can be obtained.

In the present agent, the fluorine-containing oil may be contained in an amount of, for example, 0-500 pbm, preferably 0-400 pbm, and more preferably 5-300 pbm, based on the total 100 pbm of the perfluoropolyether group-containing compound (in the case of two or more in each, the total of them; the same shall apply hereinafter).

The compound (3a) and the compound (3b) may be each used singly, or may be each used in combination. The compound (3b) is preferably used rather than the compound (3a) because higher surface lubricity is obtained. When these are used in combination, the mass ratio between the compound (3a) and the compound (3b) is preferably 1:1 to 1:30, and more preferably 1:1 to 1:10. According to such a mass ratio, a surface-treating layer excellent in a balance between surface lubricity and friction durability may be obtained.

In one embodiment, the fluorine-containing oil contains one or more compounds (3b). In such an embodiment, the mass ratio between the total amount of the perfluoro(poly)ether group-containing compounds and the amount of the compound (3b) in the surface-treating agent is preferably 10:1 to 1:10, and more preferably 4:1 to 1:4.

In one embodiment, the average molecular weight of the compound (3a) is preferably 2,000-8,000.

In one embodiment, the average molecular weight of the compound (3b) is preferably 8,000-30,000.

In another embodiment, the average molecular weight of the compound (3b) is preferably 3,000-8,000.

In a preferred embodiment, when the surface-treating layer is formed by a vacuum deposition method, the average molecular weight of the fluorine-containing oil may be made higher than the average molecular weight of the perfluoro(poly)ether group-containing compound. By adopting such average molecular weights, more excellent friction durability and surface lubricity may be obtained.

From another viewpoint, the fluorine-containing oil may be a compound the formula Rf³-F (wherein Rf³ is C₅₋₁₆-perfluoroalkyl). Alternatively, the fluorine-containing oil may be a chlorotrifluoroethylene oligomer. The compound represented by Rf³-F and the chlorotrifluoroethylene oligomer are preferable because they have high affinity for a compound represented by the fluorine-containing compound having a C₁₋₁₆-perfluoroalkyl group at the end and having a carbon-carbon unsaturated bond at the molecular end.

The fluorine-containing oil contributes to enhancement in surface lubricity of a surface-treating layer that is formed using the surface-treating agent.

The silicone oil may be a linear or cyclic silicone oil having, for example, ≤ 2,000 siloxane bonds. The linear silicone oil may be a so-called linear silicone oil or a modified silicone oil. Examples of the straight silicone oil include dimethyl silicone oil, methyl phenyl silicone oil and methyl hydrogen silicone oil. Examples of the modified silicone oil include those wherein straight silicone oils have been modified with alkyl, aralkyl, polyether, higher fatty acid ester, fluoroalkyl, amino, epoxy, carboxyl or alcohol. The cyclic silicone oil is, for example, cyclic dimethylsiloxane oil.

In the present agent, such a silicone oil can be contained in an amount of, for example, 0-300 pbm, and preferably 0-200 pbm, based on the total 100 pbm of the perfluoro(poly)ether group-containing compound (in the case of two or more, the total of them; the same shall apply hereinafter).

The silicone oil contributes to enhancement in surface lubricity of a surface-treating layer that is formed using the surface-treating agent.

Examples of the catalyst include an acid (e.g., acetic acid, trifluoroacetic acid), a base (e.g., ammonia, triethylamine, diethylamine), and a transition metal (e.g., Ti, Ni, Sn).

In the present agent, the catalyst can be contained in an amount of, for example, 0.001-20 pbm, and more preferably 0.001-5 pbm, based on the total 100 pbm of the fluorine-containing compound (in the case of two or more, the total of them; the same shall apply hereinafter).

The other components include alcohol compounds having 1-6 carbon atoms in addition to the above components.

### [Pellet]

The present agent can be formed into pellets by impregnating the agent into a porous material such as a porous ceramic material, or steel fibers for example that obtained by solidifying a steel wool. The pellets can be used in, for example, vacuum deposition.

### [Article]

The present article is described below.

The present article comprises a base material and a layer which is formed on a surface of the base material from the present agent (surface-treating layer, **e.g.,** antifouling coating layer).

The base material can be composed of any suitable materials, such as a glass, a resin (may be a natural or synthetic resin such as a common plastic material, and may be in the form of e.g. a plate or a film), a metal (may be a simple metal such as aluminum, copper, iron, zinc, titanium and zirconium, or composites such as alloys), a ceramic, a semiconductor (e.g. silicon or germanium), a fiber (e.g. a woven fabric or a nonwoven fabric), a fur, a leather, a wood, a pottery and porcelain ware, a stone, and a building component.

Preferred examples of the glass include sapphire glass, soda-lime glass, alkali aluminosilicate glass, borosilicate glass, alkali-free glass, crystal glass and quartz glass, and particularly preferred examples thereof include chemically strengthened soda-lime glass, chemically strengthened alkali aluminosilicate glass and chemically bonded borosilicate glass.

The resin is preferably acrylic resin or polycarbonate.

In one embodiment, when the article to be manufactured is an optical member, the material to form the surface of the base material may be a material for an optical member, such as glass or transparent plastic. When the article to be manufactured is an optical member, some sort of layer (or film) such as a hard coat layer or an antireflection layer may be formed on the surface (outermost layer) of the base material. The antireflection layer may be either a single-layer antireflection layer or a multilayer antireflection layer. Examples of inorganic material that can be used for the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, WO₃ and SiN. These inorganic materials may be used singly or in combination of two or more (e.g., as a mixture). In the case of a multilayer antireflection layer, it is preferable to use SiO₂ and/or SiO for its outermost layer. When the article to be manufactured is an optical glass component for a touch panel, the article may have a transparent electrode, such as a thin film using indium tin oxide (ITO) or indium zinc oxide, on a part of the surface of the base material (glass). Further, the base material may have, for example, an insulating layer, an adhesive layer, a protecting layer, a decorated frame layer (I-CON), an atomized film layer, a hard coating layer, a polarizing film, a retardation film, and a liquid crystal display module according to the specifications of the article.

In such a base material, at least its surface portion may be composed of a material originally having a hydroxyl group. Examples of such a material include glass, a metal (particularly, base metal) on a surface of which a natural oxidized film or a thermal oxidized film is to be formed, ceramic and semiconductor. Alternatively, in the case of a material that does not have sufficient hydroxyl groups or does not originally have a hydroxyl group, such as a resin, hydroxyl groups can be introduced to the surface of the base material or can be increased by subjecting the base material to some sort of pretreatment. Examples of such pretreatment include plasma treatment (e.g., corona discharge) and ion beam irradiation. The plasma treatment can introduce hydroxyl groups to the surface of the base material or can increase them, and besides, it can be favorably utilized also for cleaning the surface of the base material (i.e., for e.g. removing foreign matters). Another example of such pretreatment is a method in which a surface adsorbent having a carbon-carbon unsaturated bond group is previously formed in the form of a monomolecular film on the surface of the base material through e.g. LB technique (Langmuir-Blodgett's technique) or chemical adsorption method, followed by cleaving the unsaturated bond in an atmosphere containing e.g. oxygen or nitrogen.

Alternatively, in such a base material, at least its surface portion may be composed of a material containing a compound having other reactive groups, such as a silicone compound having one or more Si-H groups, or alkoxysilane.

In one embodiment, the base material has a layer formed of diamond-like carbon (diamond-like carbon layer). In this embodiment, the base material preferably has the diamond-like carbon layer on a surface (outermost layer) of the base material. The base material may further have, for example, a hard coat layer or an antireflection layer. The hard coat layer or the antireflection layer may be provided in contact with the diamond-like carbon layer that is provided on the surface (outermost layer) of the base material.

The diamond-like carbon means carbon having an amorphous structure in which both a diamond bond (bond between carbons due to sp³ hybrid orbital) and a graphite bond (bond between carbons due to sp² hybrid orbital) are mixed. The diamond-like carbon may contain atoms other than carbon, such as hydrogen, oxygen, silicon, nitrogen, aluminum, boron and phosphorus.

The thickness of the diamond-like carbon layer is not limited, and can be, for example, 1 nm to 100 µm, preferably 1-1000 nm, and more preferably 1-100 nm.

The diamond-like carbon layer can be formed, for example, by a chemical vapor deposition (CVD) method, such as thermal CVD method or plasma CVD method, or a physical vapor deposition (PVD) method, such as vacuum deposition method or sputtering method.

The shape of the base material is not limited. The surface region of the base material where the surface-treating layer should be formed is at least a part of the surface of the base material, and may be properly determined according to, for example, the use application of the article to be manufactured and the specifications thereof.

Next, the present method for forming a surface-treating layer on a surface of such a base material is described. The present method comprises supplying the presentagent to a surface of the base material to form a surface-treating layer on the surface of the base material. More specifically, a film of the surface-treating agent is formed, and this film is subjected to post-treatment, when needed, whereby a surface-treating layer is formed from the present agent.

The method for forming the film of the present agent is not limited. For example, a wet coating method and a dry coating method can be used.

Examples of the wet coating method include dip coating, spin coating, flow coating, spray coating, roll coating, gravure coating and analogous methods.

Examples of the dry coating method include deposition (usually, vacuum deposition), sputtering, CVD and analogous methods. Specific examples of the deposition method (usually, vacuum deposition method) include resistance heating, electron beam, high-frequency heating using e.g. microwaves, ion beam and analogous methods. Specific examples of the CVD method include plasma CVD, optical CVD, and thermal CVD.

Moreover, coating by an atmospheric pressure plasma method is also possible.

When the wet coating method is used, the surface-treating agent may be applied to the surface of the base material after diluted with a solvent. From the viewpoints of stability of the surface-treating agent and volatility of the solvent, the following solvents are preferably used: a C₅₋₁₂-perfluoroaliphatic hydrocarbon (e.g., perfluorohexane, perfluoromethylcyclohexane and perfluoro-1,3-dimethylcyclohexane); a polyfluoroaromatic hydrocarbon (e.g., bis(trifluoromethyl)benzene); a polyfluoroaliphatic hydrocarbon (e.g., C₆F₁₃CH₂CH₃ (e.g., ASAHIKLIN (trademark) AC-6000 manufactured by Asahi Glass Co., Ltd.), 1,1,2,2,3,3,4-heptafluorocyclopentane (e.g., ZEORORA (trademark) H manufactured by Zeon Corporation)); a hydrofluorocarbon (HFC) (e.g., 1,1,1,3,3-pentafluorobutane (HFC-365mfc)); a hydrochlorofluorocarbon (e.g., HCFC-225 (ASAHIKLIN (trademark) AK-225)); a hydrofluoroether (HFE) (for example, an alkyl perfluoroalkyl ether (perfluoroalkyl group and alkyl group may be each linear or branched), such as perfluoropropyl methyl ether (C₃F₇OCH₃) (e.g., Novec (brand name) 7000 manufactured by Sumitomo 3M Limited), perfluorobutyl methyl ether (C₄F_{g}OCH₃) (e.g., Novec (brand name) 7100 manufactured by Sumitomo 3M Limited), perfluorobutyl ethyl ether (C₄F₉OC₂H₅) (e.g., Novec (brand name) 7200 manufactured by Sumitomo 3M Limited), and perfluorohexyl methyl ether (C₂F₅CF(OCH₃)C₃F₇) (e.g., Novec (brand name) 7300 manufactured by Sumitomo 3M Limited), or CF₃CH₂OCF₂CHF₂ (e.g., ASAHIKLIN (trademark) AE-3000 manufactured by AGC Inc.)), and 1,2-dichloro-1,3,3,3-tetrafluoro-1-propene (e.g., Vertrel (trademark) Sion manufactured by DuPont-Mitsui Fluorochemicals Co., Ltd.). These solvents can be used singly or as a mixture of a combination of two or more. Moreover, these solvents can also be mixed with other solvents in order to, for example, control the solubility of the PFPE-containing compound.

When the dry coating method is used, the surface-treating agent may be subjected to the dry coating method as it is, or may be subjected to the dry coating method after diluted with the solvent given as an example with regard to the wet coating method. For example, the surface-treating agent may be subjected to deposition (usually, vacuum deposition) treatment as it is, or a pellet-like material obtained by impregnating the surface-treating agent into a metallic porous body such as iron or copper or a ceramic porous body may be subjected to deposition (usually, vacuum deposition) treatment.

In a preferred embodiment, for forming the film of the surface-treating agent, a deposition method is used, more preferably, at least one of CVD and high-frequency heating (particularly, resistance heating, electron beam) is used, and particularly preferably, electron beam is used.

The post treatment is, for example, heat treatment. The temperature of the heat treatment is not limited, and may be, for example, 60-250°C, and preferably 100-180°C. The time of the heat treatment is not limited, and may be, for example, 30 minutes to 5 hours, and preferably 1-3 hours.

The thickness of the surface-treating layer is not limited. In the case of an optical member, the thickness of the surface-treating layer is 1-50 nm, preferably 1-30 nm, and more preferably 1-15 nm, from the viewpoints of optical performance, surface lubricity, friction durability and antifouling property.

In such a manner as described above, the surface-treating layer is formed on the surface of the base material using the surface-treating agent.

As described above, in JP-A-2008-534696 and WO 97/07155, the layer formed from the surface-treating agent and the base material are bonded by means of a -Si-O-Si- bond, and in JP-A-2016-52779, they are bonded by means of e.g. a -C-O- bond, a -C-N- bond, a -C-S- bond.

On the other hand, the perfluoro(poly)ether group-containing compound contained in the present agent is decomposed at the peroxide structure by such a treatment as above. Through the decomposition at the peroxide structure, a plurality of compounds having a radical (radical reactive group) at the end and containing PFPE may be produced from one molecule of the PFPE-containing compound represented by formula (A) contained in the surface-treating agent. It is thought that since the surface-treating layer formed by using the present agent and the base material are bonded by means of this radical reactive group, the surface-treating layer exhibits excellent friction durability.

The surface-treating layer obtained as above has not only high friction durability but also high surface lubricity. Further, this surface-treating layer can have, in addition to the high friction durability, for example, water-repellency, oil-repellency, antifouling property (to prevent adhesion of stains such as fingerprint), water-proof property (e.g. to prevent intrusion of water into electronic components), and surface lubricity (or lubricity, for example, wipe-off property against stains such as fingerprint, or excellent feel to finger), though it depends on the composition of the surface-treating agent used, and the surface-treating layer can be favorably utilized as a functional thin film.

In a preferred embodiment, the base material has a diamond-like carbon layer, and a deposition method is used for forming a film of the surface-treating agent. The resulting radical derived from the PEPF-containing compound of formula (A) is bonded to a bond due to sp² hybrid orbital of the diamond-like carbon layer (present particularly on a surface of the diamond-like carbon layer), whereby a surface-treating layer having better friction durability may be formed.

In one embodiment, the present article is an optical material having the surface-treating layer as the outermost layer.

Preferred examples of the optical material include optical materials related to e.g. displays, and a wide variety of optical materials: for example, cathode ray tube (CRT; e.g., computer monitor), displays such as liquid crystal display, plasma display, organic EL display, inorganic thin-film EL dot matrix display, rear projection display, vacuum fluorescent display (VFD) and field emission display (FED), protective plates of these displays, and materials obtained by subjecting surfaces of these displays to antireflection film treatment.

Although the present article is not limited, it may be an optical member. Examples of the optical member include the following ones: lenses of e.g. eye glasses; front surface protective plate, antireflection plate, polarizing plate and anti-glare plate of displays such as PDP and LCD; touch panel sheets of equipment such as cellular phone and personal digital assistant; disc surfaces of optical discs such as Blu-ray (Blu-ray (trademark)) disc, DVD disc, CD-R and MO; optical fiber; display surfaces of clocks.

Alternatively, the present may be medical equipment or a medical material.

### Examples

The present invention is described more specifically with reference to the following Examples. In the present examples, the order of presence of four repeating units (CF₂O), (CF₂CF₂O), (CF₂CF₂CF₂O) and (CF₂CF₂CF₂CF₂O), and (O) to constitute perfluoropolyether is arbitrary.

### (Example 1)

On chemically strengthened glass (manufactured by Corning Incorporated, "Gorilla" glass, thickness 0.7 mm), plasma was generated by a plasma CVD device using methane as a raw material gas (pressure: 1.0 × 10⁻³ Pa, methane flow rate: 20 sccm), thereby forming a diamond-like carbon layer. Subsequently, in a vacuum deposition device, a perfluoropolyether compound (A) having peroxide in a molecule was vacuum-deposited on the diamond-like carbon layer by an electron beam in an amount of 0.4 mg per sheet (55 mm × 100 mm) of the chemically strengthened glass. Thereafter, the chemically strengthened glass with a deposited film was heat-treated at a temperature of 150°C for 100 minutes and allowed to cool at room temperature for not shorter than 100 minutes, and thereafter, e.g. an unreacted perfluoropolyether compound (A) on the treated surface were wiped off with ethanol, thereby forming a surface-treating layer.
- Perfluoropolyether compound (A) having peroxide structure in molecule

   CF₃O- [PFPE1-O]ₙ₁-CF₃

   (provided that [PFPE1-O]ₙₗ- is (CF₂CF₂0) ₅₅- (CF₂O)₅₅- (O)₈-(CF₂CF₂CF₂O)₂- (CF₂CF₂CF₂CF₂O)₂. )

### (Comparative Example 1)

A surface-treating layer was formed in the same manner as in Example 1, except that instead of the compound (A), a perfluoropolyether compound (B) having the following average composition and having no peroxide structure in a molecule was used.

### • Perfluoropolyether compound (B)

CF₃O- (CF₂CF₂0) ₈₆- (CF₂O)₈₆- (CF₂CF₂CF₂O)₂⁻ (CF₂CF₂CF₂CF₂O)₂-CF₃

### (Comparative Example 2)

On a surface of chemically strengthened glass (manufactured by Corning Incorporated, "Gorilla" glass, thickness 0.7 mm), silicon dioxide was deposited in a thickness of 7 nm by an electron beam deposition system to form a silicon dioxide film. Thereafter, a silane group-containing perfluoropolyether compound (D) having the following average composition was vacuum-deposited by resistance heating in an amount of 0.4 mg per sheet (55 mm × 100 mm) of the chemically strengthened glass. Thereafter, the chemically strengthened glass with a deposited film was heat-treated at a temperature of 150°C for not shorter than 100 minutes and allowed to cool at room temperature for not shorter than one hour, and thereafter, e.g. an unreacted perfluoropolyether compound (D) on the treated surface were wiped off with ethanol, thereby forming a surface-treating layer.
- Silane group-containing perfluoropolyether compound (D) CF₃CF₂CF₂O (CF₂CF₂CF₂O)₂CF₂CF₂CH₂OCH₂CH₂CH₂Si (OCH₃)₃

### • Evaluation of durability to artificial sweat

With regard to the surface-treating layers formed in Example 1 and Comparative Examples 1 and 2, durability to artificial sweat was evaluated.

First, in a state where anything had not touched the surface of the surface-treating layer yet after the formation of the layer, a static contact angle of water was measured (standstill time 0 hour) as the initial evaluation. Thereafter, on the surface of the base material where the surface-treating layer had been formed, about 1 g of artificial sweat having the following composition was allowed to stand still, and under the heating and humidifying conditions of 65°C and a humidity of 90%, it was allowed to stand still for 24 hours, 48 hours, 96 hours and 168 hours. Thereafter, the surface of the surface-treating layer was washed with distilled water and ethanol, and thereafter, a static contact angle (degree(s)) of water was measured. When the measured value of the contact angle became less than 100 degrees, the evaluation was stopped. The results are set forth in Table 1, and the ratios of the measured values of the contact angles to the contact angles in the case of a standstill time of 0 hour (initial contact angles) are set forth in Table 2 (in the tables, the symbol "-" means "not measured").

### (Composition of artificial sweat)

Anhydrous disodium hydrogenphosphate: 2 g
Sodium chloride: 20 g
85% Lactic acid: 2 g
Histidine hydrochloride: 5 g
Distilled water: 1 kg

### • Method for measuring static contact angle of water

Measurement of the static contact angle of water was carried out with 1 µL of water in an environment of 25°C using a contact angle measuring device (manufactured by Kyowa Interface Science Co., Ltd.).

**[Table 1]**

| Standstill time (hour(s)) | Contact angle (degree(s)) | | |
|---|---|---|---|
| | Ex. 1 | Comp. Ex. 1 | Comp. Ex. 2 |
| 0 | 106 | 102 | 114 |
| 24 | 105 | 100 | 112 |
| 48 | 105 | 95 | 107 |
| 96 | 104 | - | 104 |
| 168 | 104 | - | 97 |

**[Table 2]**

| Standstill time (hour(s)) | Proportion of contact angle to initial contact angle (%) | | |
|---|---|---|---|
| | Ex. 1 | Comp. Ex. 1 | Comp. Ex. 2 |
| 0 | 100 | 100 | 100 |
| 24 | 99 | 98 | 98 |
| 48 | 99 | 93 | 94 |
| 96 | 98 | - | 91 |
| 168 | 98 | - | 85 |

### • Friction durability evaluation

With regard to the surface-treating layers formed on the surfaces of the base material in the above Example 1 and Comparative Examples 1 and 2, friction durability was evaluated by an eraser friction durability test. Specifically, a sample article in which a surface-treating layer had been formed was horizontally placed, then an eraser (manufactured by KOKUYO Co., Ltd., KESHI-70, planar dimension 1 cm × 1.6 cm) was brought into contact with a surface of the surface-treating layer, then a load of 500 gf was applied onto it, and thereafter, the eraser in the load-applied state was moved back and forth at a rate of 20 mm/second.

In a state where anything had not touched the surface of the surface-treating layer yet after the formation of the layer, a static contact angle of water was measured (number of frictions 0 time) as the initial evaluation. Thereafter, the static contact angle (degree(s)) of water was measured every 500 reciprocation times, and the measurement was repeated until the measured value of the contact angle became less than 100 degrees. The measurement results of the contact angles are set forth in Table 3, and the ratios of the measured values of the contact angles to the measured values of the contact angles in the case of the number of frictions of 0 time (initial contact angles) are set forth in Table 4 (in the tables, the symbol **"-"** means "not measured").

**[Table 3]**

| Number of frictions (time(s)) | Contact angle (degree(s)) | | |
|---|---|---|---|
| | Ex. 1 | Comp. Ex. 1 | Comp. Ex. 2 |
| 0 | 106 | 102 | 114 |
| 500 | 105 | 96 | 111 |
| 1000 | 104 | - | 108 |
| 1500 | 104 | - | 103 |
| 2000 | 104 | - | 99 |
| 2500 | 102 | - | - |
| 3000 | 96 | - | - |

**[Table 4]**

| Number of frictions (time(s)) | Proportion of contact angle to initial contact angle (%) | | |
|---|---|---|---|
| | Ex. 1 | Comp. Ex. 1 | Comp. Ex. 2 |
| 0 | 100 | 100 | 100 |
| 500 | 99 | 94 | 97 |
| 1000 | 98 | - | 95 |
| 1500 | 98 | - | 90 |
| 2000 | 98 | - | 87 |
| 2500 | 96 | - | - |
| 3000 | 91 | - | - |

As understood from Tables 1-4, the surface-treating layer of Example 1 showed small decrease in the numerical value of the contact angle in both of the evaluation of durability to artificial sweat and the friction durability evaluation, and was confirmed to exhibit excellent sweat resistance and excellent friction durability. The compound (A) used in Example 1 had a peroxide structure in one molecule, and it is thought that the irradiation with electron beam caused cleavage at the peroxide structure, whereby a plurality of compounds containing a radical reactive group and PFPE were formed. It is thought that a large number of the compounds containing the radical reactive group and PFPE reacted with the diamond-like carbon layer, and therefore, not only the durability to artificial sweat but also the friction durability were improved.

On the other hand, the perfluoropolyether compound (B) of Comparative Example 1 did not have a peroxide structure in its molecular structure, and formation of a radical reactive group became difficult. On that account, it is thought that the reaction with the diamond-like carbon layer did not easily occur, and in an alkaline environment where the surface-treating layer was in contact with artificial sweat, hydrolysis reaction easily occurred. In Comparative Example 2, the compound (D) was bonded to the silicon dioxide film on the strengthened glass by means of a Si-O-Si bond. It is thought that in an alkaline environment where the surface-treating layer was in contact with artificial sweat, hydrolysis reaction of a Si-O-Si bond easily occurred, and therefore, in the surface-treating layer of Comparative Example 2, a decrease in the contact angle easily occurred in the evaluation of durability to artificial sweat.

### Industrial Applicability

The present invention can be favorably utilized in order to form a surface-treating layer on various base materials, particularly on a surface of an optical member.

## Claims

1. An agent which is a surface-treating agent comprising a perfluoro(poly)ether group-containing compound of formula (A):
Rf-(PFPE-Z¹-Y-Z²)*ₙ*-R (A)
wherein
Rf is C₁₋₁₆-alkyl optionally substituted by one or more fluorine atoms;
PFPE each independently is a group of the formula (a), (b) or (c):
-(OCF₂CF₂CF₂)*_{d}*- (a)
wherein d is an integer of 1-200;
-(OCF₂CF₂CF₂CF₂)_{c}-(OCF₂CF₂CF₂)_{d}-(OCF₂CF₂)ₑ-(OCF₂)_{f}- (b)
wherein c and d each independently are an integer of 0-30; e and *f* each independently are an integer of 1-200; the sum of *(c+d+e+f)* is an integer of 10-200; and the order of repeating units in parentheses and affixed with a subscript *c, d, e* or*f is* arbitrary;
-(R⁶-R⁷)*ⱼ-* (c)
wherein R⁶ is OCF₂ or O(CF₃)₂; R⁷ is O(CF₂)₂, O(CF₂)₃, O(CF₂)₄, O(CF₂)₅, O(CF₂)₆ or a combination of 2 or 3 of these groups; and *j* is an integer of 2-100.
Z¹ each independently is a single bond or optionally substituted C₁₋₁₂-alkylene;
Z² each independently is a single bond or optionally substituted C₁₋₁₂-alkylene;
Y each independently is -O- or -O-O-; provided that at least one -O-O- is present in formula (A);
*n* is an integer of 1-400;
R is -PFPE-Rf' or Rf'; and
Rf' has the same definition as that of Rf.

2. The agent of claim 1, wherein the mass of active oxygen, based on 100 g of the compound of formula (A), is ≤ 5.

3. The agent of claim 1 or 2, wherein Rf is C₁₋₁₆-perfluoroalkyl.

4. The agent of any of claims 1-3, further comprising one or more other components selected from a fluorine-containing oil, a silicone oil, an alcohol and a catalyst.

5. The agent of any of claims 1-4, further comprising a solvent.

6. A pellet comprising the agent of any of claims 1-5.

7. An article comprising a base material and a layer which is formed on a surface of the base material from the agent of any of claims 1-5.

8. The article of claim 7, wherein the base material has a diamond-like carbon layer.

9. The article of claim 7 or 8, wherein the article is an optical member, preferably a display.

10. A method for forming a surface-treating layer on a surface of a base material, comprising supplying the agent of any of claims 1-5 to a surface of the base material to form a surface-treating layer on the surface of the base material.

11. The method of claim 10, wherein an electron beam is used for forming the surface-treating layer.

## Patentansprüche

1. Mittel, das ein Oberflächenbehandlungsmittel ist, umfassend eine Perfluor(poly)ethergruppen-haltige Verbindung der Formel (A):
Rf-(PFPE-Z¹-Y-Z²)-R (A)
worin
Rf C₁₋₁₆-Alkyl, optional mit einem oder mehrere Fluoratome substituiert, ist;
PFPE jeweils unabhängig voneinander eine Gruppe der Formel (a), (b) oder (c) ist:
- (OCF₂CF₂CF₂) *_{d}*- (a)
worin d eine ganze Zahl von 1-200 ist;
- (OCF₂CF₂CF₂CF₂) *_{c}*- (OCF₂CF₂CF₂) *_{d}*- (OCF₂CF₂) *ₑ*- (OCF₂)*_{f}-* (b)
worin c und d jeweils unabhängig voneinander eine ganze Zahl von 0-30 sind; e und f jeweils unabhängig voneinander eine ganze Zahl von 1-200 sind; die Summe von *(c+d+e+f)* eine ganze Zahl von 10-200 ist; und die Reihenfolge der Wiederholungseinheiten in Klammern und mit einem Index c, *d,* e oder f beliebig ist;
- (R⁶-R⁷)*ⱼ*- (c)
worin R⁶ OCF₂ oder O (CF₂) ₂ ist; R⁷ O (CF₂) ₂, O(CF₂) ₃, O(CF₂)₄, O(CF₂)₅, O(CF₂)₆ oder eine Kombination aus 2 oder 3 dieser Gruppen ist; und j eine ganze Zahl von 2-100 ist.
Z¹ jeweils unabhängig voneinander eine Einfachbindung oder optional substituiertes C₁₋₁₂-Alkylen ist;
Z² jeweils unabhängig voneinander eine Einfachbindung oder optional substituiertes C₁₋₁₂-Alkylen ist;
Y jeweils unabhängig voneinander -O- oder -O-O- ist; vorausgesetzt, dass mindestens ein -O-O- in Formel (A) vorhanden ist;
*n* eine ganze Zahl von 1-400 ist;
R -PFPE-Rf' oder Rf' ist; und
Rf' die gleiche Definition wie Rf hat.

2. Mittel gemäß Anspruch 1, wobei die Masse von aktivem Sauerstoff, bezogen auf 100 g der Verbindung der Formel (A), ≤ 5 ist.

3. Mittel gemäß Anspruch 1 oder 2, wobei Rf C₁₋₁₆-Perfluoralkyl ist.

4. Mittel gemäß einem der Ansprüche 1-3, ferner umfassend eine oder mehrere weitere Komponenten, die aus einem fluorhaltigen Öl, einem Silikonöl, einem Alkohol und einem Katalysator ausgewählt sind.

5. Mittel gemäß einem der Ansprüche 1-4, ferner umfassend ein Lösungsmittel.

6. Pellet, umfassend das Mittel gemäß einem der Ansprüche 1-5.

7. Artikel, umfassend ein Basismaterial und eine Schicht, die auf einer Oberfläche des Basismaterials aus dem Mittel gemäß einem der Ansprüche 1-5 gebildet ist.

8. Artikel gemäß Anspruch 7, wobei das Basismaterial eine diamantähnliche Kohlenstoffschicht aufweist.

9. Artikel gemäß Anspruch 7 oder 8, wobei der Artikel ein optisches Element, vorzugsweise ein Display, ist.

10. Verfahren zum Bilden einer Oberflächenbehandlungsschicht auf einer Oberfläche eines Basismaterials, umfassend das Zuführen des Mittels gemäß einem der Ansprüche 1-5 auf eine Oberfläche des Basismaterials, um eine Oberflächenbehandlungsschicht auf der Oberfläche des Basismaterials zu bilden.

11. Verfahren gemäß Anspruch 10, wobei ein Elektronenstrahl zum Bilden der Oberflächenbehandlungsschicht verwendet wird.

## Revendications

1. Agent de traitement qui est un agent de traitement de surface comprenant un composé contenant un groupe perfluoro(poly)éther de formule (A) :
Rf-(PFPE-Z1-Y-Z²)*ₙ*-R (A)
dans lequel
Rf est un alkyle en C₁₋₁₆ facultativement substitué par un ou plusieurs atomes de fluor ;
PFPE, chacun indépendamment, est un groupe de la formule (a), (b) ou (c) :
-(OCF₂CF₂CF₂)_{*d*-} (a)
dans lequel d est un nombre entier de 1 à 200 ;
-(OCF₂CF₂CF₂CF₂)_{c}-(OCF₂CF₂CF₂)*_{d}*-(OCF₂CF₂)ₑ-(OCF₂)*_{f}*- (b)
dans lequel c et d sont, chacun indépendamment, un nombre entier de 0 à 30 ;
e et f sont, chacun indépendamment, un nombre entier de 1 à 200 ; la somme de (*c*+*d*+*e*+*f*) est un nombre entier de 10 à 200 ; et l'ordre des unités de répétition entre parenthèses et munies d'un indice c, *d,* e ou f est arbitraire ;
-(R₆-R₇)ⱼ- (c)
dans lequel R⁶ est OCF₂ ou O(CF₂)₂ ; R⁷ est O(CF₂)₂, O(CF₂)₃, O(CF₂)₄, O(CF₂)₅, O(CF₂)₆ ou une combinaison de 2 ou 3 de ces groupes ; et j est un nombre entier de 2 à 100 ;
Z¹, chacun indépendamment, est une liaison simple ou un alkylène en C₁₋₁₂ facultativement substitué ;
Z², chacun indépendamment, est une liaison simple ou un alkylène en C₁₋₁₂ facultativement substitué ;
Y, chacun indépendamment, est -0- ou -0-0- ; à condition qu'au moins un -0-0-soit présent dans la formule (A) ;
n est un nombre entier de 1 à 400 ;
R est -PFPE-Rf' ou Rf' ; et
Rf' présente la même définition que celle de Rf.

2. Agent selon la revendication 1, dans lequel la masse d'oxygène actif, sur la base de 100 g du composé de formule (A), est ≤ 5.

3. Agent selon la revendication 1 ou la revendication 2, dans lequel Rf est un perfluoroalkyle en C₁₋₁₆.

4. Agent selon l'une quelconque des revendications 1 à 3, comprenant en outre un ou plusieurs autres composants sélectionnés parmi une huile contenant du fluor, une huile de silicone, un alcool et un catalyseur.

5. Agent selon l'une quelconque des revendications 1 à 4, comprenant en outre un solvant.

6. Granulé comprenant l'agent selon l'une quelconque des revendications 1 à 5.

7. Article comprenant un matériau de base et une couche qui est formée sur une surface du matériau de base à partir de l'agent selon l'une quelconque des revendications 1 à 5.

8. Article selon la revendication 7, dans lequel le matériau de base présente une couche de carbone de type diamant.

9. Article selon la revendication 7 ou la revendication 8, dans lequel l'article est un élément optique, préférablement une unité d'affichage.

10. Procédé de formation d'une couche de traitement de surface sur une surface d'un matériau de base,
comprenant l'apport de l'agent selon l'une quelconque des revendications 1 à 5 à une surface du matériau de base afin de former une couche de traitement de surface sur la surface du matériau de base.

11. Procédé selon la revendication 10, dans lequel un faisceau d'électrons est utilisé pour former la couche de traitement de surface.
